Europäisches Patentamt

European Patent Office

Office européen des brevets

(19)

(11) Publication number: **0 314 242**

**A1**

(12) **EUROPEAN PATENT APPLICATION**

(21) Application number: **88202347.6**

(22) Date of filing: **20.10.88**

(51) Int. Cl.⁴: **E21B 33/13 , C04B 24/22 , C04B 28/02 , //(C04B28/02, 14:06,24:22,24:38)**

(30) Priority: **28.10.87 FR 8715038**
**09.08.88 FR 8810761**

(43) Date of publication of application:
**03.05.89 Bulletin 89/18**

(84) Designated Contracting States:
**DE GB IT NL**

(71) Applicant: **PUMPTECH N.V.**
**Atlantic House Noorderlaan 147 Bus 5C**
**B-2030 Antwerpen(BE)**

(72) Inventor: **Baret, Jean-François**
**7, Rue des Armuriers**
**F-42000 Saint-Etienne(FR)**
Inventor: **Drecq, Philippe**
**8, Rue du Stade**
**F-42350 La Talaudière(FR)**

(74) Representative: **Richebourg, Michel**
**Dowell Schlumberger Z.I. Molina Chazotte**
**F-42000 Saint-Etienne(FR)**

(54) **Additives for oilfield cements and corresponding cement slurries.**

(57) The invention concerns cement slurries containing silica and more particularly those containing micro-silica.

Polymelamine sulfonate is used as the dispersing agent. Contrary to currently-used dispersing agents, this agent is capable of compensating for the serious difficulties caused by the presence of silica in circumstances requiring its use.

EP 0 314 242 A1

## Additives for oilfield cements and corresponding cement slurries.

This invention concerns cement slurries used in the cementing of wells, particularly for oil, water, gas, geothermic bore holes, and similar wells. The specialist understands "cementing" to mean the pumping of slurry into the well tubing, followed by its rise in the well annulus, in which the cement must set and thus consolidate the tubing. Pressure, temperature, and pumping conditions are known to make this a delicate operation. Very special cement slurries must therefore be produced which contain additives to make them suitable for the particular conditions imposed by each well and by the nature of the geological formations traversed.

One currently-used dispersing agent is the condensation product of naphtalene sulfonic acid and formaldehyde.

This well known agent (polynaphthalene sulfonate or "PNS"), and particularly its sodium salt ("NaPNS"), are entirely satisfactory in many cases.

Its is known that the rheological performance of cement slurries depends heavily on the water/cement ratio. If this ratio decreases, a dispersing agent is required to maintain an acceptable viscosity, i.e. to ensure that the slurries remain pumpable.

When silica is added to cement slurries, the compressive strength of the cement is increased, particularly at high temperatures. The addition of silica also increases the cement's viscosity and therefore requires a supplementary addition of dispersing agent(s). The slurry quality also greatly depends on the grain size of the silica added. The finer the silica, the higher the viscosity. When micro-silica (average particle dimension between approximatively 0.05 micron and 5 microns) is used to lighten the slurry to prevent the movement of gas into the annulus, or to increase the compressive strength of the micro-silica, then the correct dispersion of the cement particles and the slurry viscosity become problems which are unsolvable with known dispersing agents such as PNS.

In the present text, "micro-silica" shall designate the micro-silica itself, as well as colloidal silica, silica flour, diatomaceous earth, fly ash, and similar products having the desired particle dimension of approx. 0.1 to 2 microns, preferably approx.0.1 micron. Since the use of micro-silica offers important technical advantages, the oil industry has a real need for a cement slurry which contains the required proportion of micro-slica (up to approximately 30% BWOC, preferably 15% BWOC - BWOC = "by weight of cement") and which can still be used in the field (i.e. which offers rheological parameters within the known limits for correct pumping, correct slurry placement, correct drilling mud placement, and which presents good cementing characteristics such as mechanical strength, bonding to tubing and rock, etc.). No such slurries have been produced using traditional dispersing agents such as PNS.

On the other hand, a chemical neighbour to PNS, and synthesized in similar manner, has been shown to surprisingly behave very differently from PNS. The dispersing agent used in this invention consits of a condensation product of melamine sulfonate and formaldehyde (polymelamine-sulfonate, designated as "PMS").

This polymelamine-sulfonate may be found in the form of a sodium salt ("NaPMS"). The sodium salt is preferable, but other metallic salts are acceptable (e.g. potassium, calcium), as well as ammonium salts. The above term shall also cover polymelamine-sulfonic acid.

It can be seen in table I below that an aqueous solution of PNS (40% by weight PNS) is incapable of dispersing cement slurries of 1.94 Kg/l (16.2 pounds per gallon) containing 11% silica BWOC, even when the PNS/water solution is applied at 26.6 l/T ( =0.3 gallon/sack of cement-gal/sack).

On the other hand, the same table I shows that an aqueous solution of PMS which is 20% PMS by weight is satisfactory (i.e. gives satisfactory rheological performance), and this at a lower concentration (approximately 8.9 at 13.3 l/T, or approx. 0.1 at 0.15 gal/sack).

Table II below shows comparative results obtained from calorimetry tests. A "Thermanalyse" calorimeter at 25° C (77° F) was used with API class "G" "CEMOIL" cement slurries having a density of 16.2 ppg (1.94 g/cm$^3$) in deionized water.

The "PNS" in this table is a 40% by weight aqueous solution of polynaphthalene-sulfonate and the "PMS" is a 20% solution of polymelamine-sulfonate.

It can been seen that the PMS has a lower retarding effect than does the PNS. This is a considerable advantage.

Table III below shows the comparative results of PNS/PMS tests in the presence of a cellulose fluid loss-control agent . It can be seen that PMS produces a clear improvement in yield value and thickening time. Once again, PMS has a lower retarding effect on the setting of the slurries.

API class "G" "DYCKERHOFF" cement slurries in deionized water at a density of 15.8 ppg (1.89

g/cm$^3$) were used in these tests.

The concentration of the fluid loss-control agent in these tests was 0.7% BWOC. The PNS concentration was 0.16 gal/sack (14.2 l/T), and that of the PMS was 0.32 gal/sack (28.4 l/T).

The test was conducted according to Schedule 5G8 for the setting time. Rheological tests were performed after 20 minutes at 160° F (71° C).

Table IV below shows the comparative results of PNS/PMS tests with an API class "H" cement.

The test conditions were the following :

Temperature : 120° F (49° C)

Schedule : 4G7

Cement : "Grind 1-87 C 1773"

Mix water : deionized

Dispersant concentration :

- PNS : 0.1 gal/sack (8.9 l/T)

- PMS : 0.2 gal/sack (17.8 l/T).

It can be seen that the PMS has a much lower retarding effect on class H cement, which is strongly retarded by PNS.

The value marked (*) were calculated without the 300 and 200 rpm values.

Table V below shows the comparative results for PNS/PMS in a heavily salted medium.

These tests were run on API class "G" "WELLCEM" cement, dionized water, 30% NaCl BWOW (by weight of water,) at 80° F (27° C), and at a density of 15.8 ppg (1.89 g/cm$^3$).

It can be seen that the PMS presents very good rheologicaal performance (low yield value and low plastic viscosity). On the other hand, PNS gives high values from these two parameters.

It has also been found in accordance with the invention that the new additive obtained by combining a known fluid loss-control agent (hydroxyethyl cellulose or HEC) with PMS is very advantageous in comparison with the conventional use of PNS, especially as additive for saturated salt cement slurriers and hight temperature cement slurries. The solid or liquid form or a solution, e.g. a 40% aqueous solution, may be used.

The following examples illustrate the present invention and should not be considered as limiting the scope of the invention.

## EXAMPLE 1

### Saturated salt cement slurries

With the slags prepared in a NaCl saturated water, particularly if a cellulose derivative is used to lower the fluid loss, the rheology can be reduced significantly by adding PMS.

It can be seen from the following table that the yield value is much lower with PMS than with PNS.

### Saturated salt cement slurry

Cement : "Dyckerhoff Gulf" (class G) Hydroxyethyl cellulose 0.7% (BWOC)

Dispersing agent : PNS 0.16 (14.2 l/T) or PMS 0.32 gal/sack (28.4 l/T)

Base fluid : saturated salt water

Temperature: 160° F (71° C)

Density : 15.8 ppg (1896 g/l)

API Standard : 5G8

EP 0 314 242 A1

|  | TY Yield value lbs/100 sqft (Pa) | PV Plastic viscosity cP | 10 min.gel (API Standard) | Gel in the cup |
|---|---|---|---|---|
| PNS | 30 (14) | 33 | 18 | Yes |
| PMS | 9 (4) | 56 | 35 | No |

Note : BWOC = by weight of cement

## EXAMPLE 2

### Cement slurries for hight-temperature wells.

When very hot wells, even shallow wells, e.g. steam injection wells, are being cemented it is necessary to add 35% of silica to the cement slurry in order to prevent the set cement from losing in strength by the high temperature of steam. Adding silica results in high rheology, which make necessary to add great amounts of dispersing agent to reach acceptable pumping conditions. In case PNS is used, a very long setting time and a bad development of the early compressive strength for temperatures lower than 60° C (140° F) are entailed. Nevertheless with PMS it is possible to reach setting time values lower than 5 hours and 16 hrs compressive strength values higher than 3000 psi (210 kg/cm$^2$) which are not obtained with PNS. These results are set out in the table below.

Typical cement slurry used for a steam injection well.

Cement : Dyckerhoff G "Gulf" (tropical grade)
Base fluid : mains water
Hydroxyethyl cellulose : 0.25% BWOC
Silica : 35% BWOC
Setting accelerator : NaCl 6% BWOC
Density : 15.6 ppg (1872 g/l)
BHCT : 100° F (1) (37.8° C)
BHST : 131° F (2) (55° C)
API Standard : 4G6

|  | PNS (0.25 Gal/sk) | PMS (0.5 Gal/sk) |
|---|---|---|
| Ty (lbs/100 sqft) (Pa) | 17.7 (8) | 2.3 (1) |
| Pv (cPs) | 62 | 63 |
| 10 min. gel (lbs/100 sqft) (Pa) | 34 (16) | 12 (6) |
| Sedimentation | No | No |
| Fluid loss API (cc/30 min.) | 632 | 178 |
| Setting time | more than 420 min. | 265 min. |
| Compressive strength 16 hrs API | 0 | 3000 psi |

## EXAMPLE 3

### Cement slurry

(1) Bottom hole circulation temperature.

(2) Bottom hole static temperature

4

Cement : Dyckerhoff "Gulf" (Class G) (tropical grade)
Hydroxyethyl cellulose 0.7% (BWOC)
Dispersing agent:
PNS 0.16 (14.2 l/t) or
PMS 0.32 gal/sack (28.4 l/t)
Base fluid : deionized water
Temperature : 160° F (71° C)
Density : 15.8 ppg (1896 g/l)
API Standard : 5G8
BWOC : by weight of cement

| Dispersing agent | Yield value lbs/100 sqft (Pa) | Plastic viscosity cP | 10 min. gel | Setting time min. | Fluid loss ml/30min | Gel in the cup |
|---|---|---|---|---|---|---|
| PNS | 4 (2) | 67.99 | 5 | 294 | 30 | NO |
| PMS | 2.26 (1.1) | 72 | 7 | 194 | 26 | NO |

### TABLE I

- API class G cement slurries at 1.94 kg/l
  (16.2 ppg) (cement/water ratio)
- Test at 74°C (165°F)
- Composition : 11% micro-silica BWOC
               5.3 1/T setting retarder
               (0.06 gal-sack)
- 0.9 1/T antifoaming agent (0.01 gal/sack)
- fluid loss-control agent (hydroxyethylcellulose)
- FLAC (TM) = fluid loss-control agent
- Ty = Yield Value
- PV = Plastic viscosity
- PMS 1 = "CHRYSO GT" produced by the Cordal company
- PMS 2 = "MELMENT L 10" produced by the SKW company
-  * aqueous solution at 20% by weight
- ** aqueous solution at 40% by weight

NOTE :

    For tables II to V :

        1 gal/sack = 88.81 1/T

        1 lbs/100 sq.ft = 0.479 Pa

        1 ppg = 0.1198 g/cm$^3$

| Test | PMS 1 * | | PMS 2 * | | PNS ** | | FLAC |
| --- | --- | --- | --- | --- | --- | --- | --- |
| | 1/T | gal/sack | 1/T | gal/sack | 1/T | gal/sack | % BWOC |
| 1 | | | | | 8.9 | 0.1 | 0.6 |
| 2 | | | 8.9 | 0.1 | | | 0.6 |
| 3 | 8.9 | 0.1 | | | | | 0.6 |
| 4 | | | | | 6.7 | 0.075 | 0.8 |
| 5 | | | | | 13.3 | 0.15 | 0.8 |
| 6 | | | | | 26.6 | 0.3 | 0.8 |
| 7 | | | 13.3 | 0.15 | | | 0.8 |
| 8 | 13.3 | 0.15 | | | | | 0.8 |

### TABLE I (cont.2)

#### Rheology of mixture    rheology at 74°C (165°F)

| Test | Ty Pa | lbf/ 100ft$^2$ | PV cP (mPa.s) | Ty Pa | lbf/ 100ft$^2$ | PV cP (mPa.s) | Fluid loss ml/30 (API) |
|---|---|---|---|---|---|---|---|
| 1 | NOT PUMPABLE | | | | | | |
| 2 | 6.9 | 14.4 | 89 | 5.6 | 11.8 | 70.6 | |
| 3 | 11 | 22.9 | 94.7 | 6.5 | 13.6 | 78.3 | |
| 4 | NOT PUMPABLE | | | | | | |
| 5 | NOT PUMPABLE | | | | | | |
| 6 | NOT PUMPABLE | | | | | | |
| 7 | 16.3 | 34.1 | 129.3 | 8 | 16.8 | 99.3 | 68 |
| 8 | 11.5 | 24.0 | 127.2 | 6.3 | 13.1 | 91.7 | 56 |

### TABLE II

| Fluid loss control additive % | Dispersant gal/sack | Slurry weight (in g.) | Setting time |
|---|---|---|---|
| 0 | 0 | 14.0701 | 8H55 |
| 0.6 | 0 | 14.0038 | 14H24 |
| 0.6 | PNS 0.3 | 14.0019 | 22H58 |
| 0.6 | PMS 0.6 | 14.9939 | 14H24 |

EP 0 314 242 A1

## TABLE III

|  | Dispersant | NaCl % bwow | Yield value in lbs/100sqft | Plastic viscosity in cP |
|---|---|---|---|---|
| A) | PNS | 0<br>30 | 4<br>29.55 | 67.99<br>33.29 |
| B) | PMS | 0<br>30 | 2.26<br>8.54 | 72<br>56.48 |

|  | 10 min. gel | Tickening time in minutes | Fluid loss in ml/30 min. | Comment |
|---|---|---|---|---|
| A) | 5<br>18 | 294 | 30 |  |
| B) | 7<br>35 | 194 | 26 | 1 |

1 Gel against the walls of the cup

## TABLE IV

| Dispersant | Density in ppg | Yield value lbs/100sqft | Plastic viscosity in cP | 10 min. gel | Sed. mm. | Thickening time in minutes |
|---|---|---|---|---|---|---|
| PNS | 14.00<br>15.80<br>16.40<br>18.00 | 2.39<br>3.07<br>2.33<br>2.87* | 2.94<br>6.60<br>13.39<br>95.71* | 5<br>5<br>7<br>16 | 30<br>0<br>0<br>0 | <br>356<br>310<br> |
| PMS | 14.00<br>15.80<br>16.40<br>18.00 | 2.65<br>3.69<br>4.59<br>12.81* | 3.32<br>13.04<br>21.04<br>93.38* | 4<br>10<br>14<br>58 | 10<br>0<br>0<br>0 | <br>225<br>195<br> |

TABLE V

| Dispersant | Concentration in gal/sack | Yield value lbs/100sqft | Plastic viscosity in cP | 10 min. gel | Sed. mm |
|---|---|---|---|---|---|
| PNS | 0 | 15.83 | 26.09 | 18 | 0 |
|  | 0.05 | 25.51 | 27.70 | 15 | 0 |
|  | 0.10 | 43.49 | 29.04 | 21 | 0 |
|  | 0.15 | 37.49 | 58.28 | 23 | 0 |
|  | 0.20 | 43.42 | 81.96 | 25 | 0 |
|  | 0.25 | 46.41 | 98.34 | 30 | 0 |
| PMS | 0 | 15.83 | 26.09 | 18 | 0 |
|  | 0.10 | 21.70 | 31.09 | 19 | 0 |
|  | 0.20 | 29.72 | 25.95 | 21 | 0 |
|  | 0.30 | 15.77 | 27.52 | 21 | 0 |
|  | 0.40 | 8.92 | 21.19 | 15 | 0 |
|  | 0.50 | 6.05 | 20.95 | 11 | 0 |

## Claims

1) Dispersing agent for oilfield and analogous cement slurries characterized by its consisting of a melamine-sulfonate and a formaldehyde condensation product (polymelamine sulfonate or PMS) and particularly its sodium salt form (Na PMS).

2) Additive for oilfield cement slurries and the like, characterized by its consisting of a combination i) of a condensation product of melamine-sulfonate and formaldehyde (polymelamine sulfonate or PMS) or of its sodium salt (Na PMS) with ii) hydroxyethyl cellulose.

3) Slurries for the cementing of oil, gas, steam, or water wells, or geothermic boreholes, characterized by their containing between 8.9 and 13.3 l of an aqueous solution which is 20% PMS by weight per T of cement (approx. 0.1 0.15 gal/sack).

4) Cement slurries according to claim 3, characterized by their containing up to approximately 30%, preferably 15%, "micro-silica" (micro silica, colloidal silica, silica flour, diatomaceous earth or fly ash with particle dimensions between 0.05 micron and 5 microns, preferably between approx. 0.1 and 2 microns) by weight of cement.

5) Cement slurries according to claim 4, characterized by micro silica particle dimensions of approximately 0.1 micron.

6) Cement slurries according to any one of claims 3 through 5 characterized by their further containing conventional additives such as antifoaming agents, set retarding agents or similar substances.

7) Cement slurries for the cementing of oil, gas, steam, water of goethermal wells, characterized in that they contain an additive according to claim 2.

8) Borehole cementing process for oil, gas, steam or water wells, geothermic boreholes or analogous wells, characterized by the pumping of any of the slurries according to claim 3 through 7.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 525 585  (SOC. FRANCAISE POUR LA PRECONTRAINTE) <br> * Claims 1-5; page 3, line 35 - page 4, line 35 * <br> --- | 1-8 | E 21 B  33/13 <br> C 04 B  24/22 <br> C 04 B  28/02 // <br> (C 04 B  28/02 <br> C 04 B  14:06 <br> C 04 B  24:22 <br> C 04 B  24:38 ) |
| Y | EP-A-0 208 535  (SHIMIZO CONSTRUCTION) <br> * Claims 1,3,4; page 6, example 1 - page 8 * <br> --- | 1-8 | |
| Y | FR-A-2 154 035  (SUDDEUTSCHE KALKSTICKSTOFFWERKE) <br> * Claim 1 * <br> --- | 1,2 | |
| Y | EP-A-0 091 377  (DOWELL SCHLUMBERGER) <br> * Claims 1,2,7,13-18 * <br> --- | 1-8 | |
| Y | US-A-4 462 837  (W.S. BAKER) <br> * Claims 1-43 * <br> ----- | 1-8 | |

TECHNICAL FIELDS
SEARCHED (Int. Cl.4)

E 21 B
C 04 B

The present search report has been drawn up for all claims

| Place of search | Date of completion of the search | Examiner |
|---|---|---|
| THE HAGUE | 03-02-1989 | ROTSAERT L.D.C. |

EPO FORM 1503 03.82 (P0401)